# EUROPEAN PATENT APPLICATION

(11) **EP 3 088 848 A2**
(43) Date of publication of application: **02.11.2016**
(21) Application number: 15460036.5
(22) Date of filing: 31.07.2015
(51) Int. Cl.: G01D 5/14, G01D 13/22

(54) **SYSTEM FOR MEASURING NON-ELECTRICAL VALUES**

(30) Priority: 30.04.2015 PL 41219515
(71) Applicant: BogArt Sp. z o.o., 11-040 Dobre Miasto (PL)
(72) Inventor: ZUK, Jacek, 01-949 Warszawa (PL)
(74) Representative: Palka, Grazyna

(57) **Abstract**

The invention relates to a system for measuring non-electrical values which comprises a microcontroller (4) connected to a power-supply system via at least one voltage regulator and a sensor (2), the sensor (2) being connected to the voltage regulator output and via a logic level shifter (5) to a microcontroller (4).

## Description

The object of the invention is a system for measuring non-electrical values, in particular, for digital tachographs.

Digital Tachograph Systems that are used in automotive systems are powered by an automotive battery. In view of battery life, consumption of power that energizes the motion sensor, which is a part of Digital Tachograph System, should be as small as possible. Maximum power consumption is specified in European Commission Regulation No. 1360/2002 of 13 June 2002 (ISO standard 16844-3).

From the application EP886760A1, a solution is known, wherein on odometer system Hall effect sensors are used, which are grounded and connected to a control unit via a signal-forming system.

From utility model CN2742445Y, a digital tachometer that can work without external energy supply is known. Said digital tachometer comprises a sensor, a permanent magnet, a low-power generator, and a circuit that stabilizes and rectifies power supplied. The sensor and the permanently-magnetic generator are driven by rotating axle of the tested element in order to produce a rotational speed signal and stabilize the power supply.

In the solutions known from a state of art, a power supply is based on di- or unipolar power supply of Hall effect sensors and other elements of the system. For example, from the description of application US4110676A, a tachometer that measures speed is known, wherein two Hall effect sensors, which are connected to a +10V power supply and to pole minus, and to an analogue-to-digital converter and a flip-flop type converter, respectively, are used.

A power supply of a microcontroller via switch-mode power supply is also known, wherein Graetz circuit rectifying diodes, low-pass filter, capacitors, pulse transformer, and feedback and PWM control systems are used. Therefore, said solution requires additional components that increase costs, space for power-supply system, and the level of generated electromagnetic interferences.

A solution concerning power supply of microcontroller and Hall effect sensor in a motion sensor of VDO company is also known. In said solution specialized components with low power consumption are used, and in a standard system power rating 10mA is reached.

Also, in the state of art, a solution concerning a motion sensor that comprises a microcontroller and a Hall effect sensor is known, wherein the Hall effect sensor is connected to the power supply and to the microcontroller. Power that energizes the Hall effect sensor is carried to the ground, thereby the power that energizes microcontroller combines with the power that energizes Hall effect sensor; as a result, the total power that energizes motion sensor is greater than desired value and is 22mA.

The object of the invention is to solve the problem of power consumption by means of a system for measuring non-electrical values, for example, in a digital tachograph system. Reducing power consumption by means of the system for measuring non-electrical values (unit for measuring non-electrical values) allows to connect other devices to the digital tachograph without exceeding maximum permissible power consumption.

The system for measuring non-electrical values is characterised in that a sensor is connected to the output of at least one voltage regulator and, via a logic level shifter, to a microcontroller.

Preferably, the voltage regulator output is a core power supply voltage regulator output.

Preferably, the sensor is a sensor that converts non-electrical value into electrical value, preferably it is a capacitive sensor or photoelectric sensor.

Also, preferably when the sensor is a magnetic field sensor, preferably a Hall effect sensor.

Preferably, the logic level shifter is a single transistor shifter.

Preferably, the microcontroller is a programmable logic circuit and preferably it constitutes a FPGA-type system.

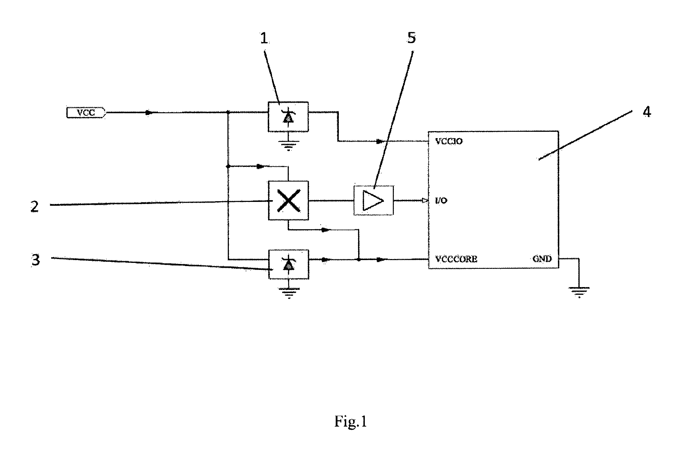

The object of the invention is illustrated on the drawing, wherein fig.1 represents a scheme of a system for measuring non-electrical values, motion, for a digital tachograph.

A system for measuring non-electrical values for a digital tachograph of fig. 1 comprises a FPGA microcontroller 4, whose supply voltage input V_{CCIO} is connected to a power-supply system V_{CC}, in a range from 6.5V to 9V, via a power supply voltage regulator 1 (3.3V), whereas a core supply voltage input V_{CCCORE} is connected to a core supply voltage regulator 3 output V_{CCCORE} (1.5V) and an output of the Hall effect sensor 2 ground. Core power supply voltage regulator 3 V_{CCCORE}, on the input, is connected to the power-supply system V_{CC} and on the output to the output of Hall effect sensor 2 ground and, consequently, to the FPGA microcontroller 4. Meanwhile, Hall effect sensor 2 is connected to the power-supply system V_{CC} and to the core supply voltage regulator 3 output, and Hall effect sensor 2 signal output is connected to the input I/O of the FPGA microcontroller 4 via a single transistor logic level shifter. As the Hall effect sensor 2 is not connected to the ground, in order to correctly adjust the signal transmitted from the Hall generator 2 to the I/O input of the FPGA microcontroller 4, it is necessary to use a logic level shifter 5.

In the system for measuring non-electrical values, in particular in this case, in a system for measuring motion, the power that energizes the Hall effect sensor 2 is used for simultaneously energizing the core of FPGA microcontroller 4.

The power which energizes the FPGA microcontroller 4 via a voltage regulator 1 V_{CCIO}, the Hall effect sensor 2, and the core supply voltage regulator 3 V_{CCCORE}, is supplied from power-supply system V_{CC}. On the voltage supply input V_{CCIO} of the FPGA microcontroller 4 a 4mA current should flow, and on the core supply voltage input V_{CCCORE} a 10mA current; however, because of the power that is consumed by the Hall effect sensor (8mA), in the solutions from the prior art, there is a need to provide power supply of 22mA, in other words, exceeding the maximum power supply (15mA) of the motion sensor, in compliance with ISO16844-3.

In the solution according to the invention, power that is needed on the core supply voltage input V_{CCCORE} is supplied, among other things, from the Hall effect sensor 2 which is connected to the core supply voltage regulator 3 output rather than to the ground. Then the Hall effect sensor 2 energizes 8mA to the core supply voltage input V_{CCCORE}, and the core supply voltage regulator 3 supplies solely the missing part of power, which energizes the core of FPGA microcontroller 4, that is 2mA, at the same time determining the nominal level of the voltage. The solution allows to reduce power consumption to 14mA, in other words, by the rate that is consumed by the Hall effect sensor 2.

In embodiments of a system for measuring non-electrical values any sensor 2 which converts a non-electrical value like rotational speed, distance, angle of rotation into an electrical value can be used. It could be, for example, a capacitive sensor, a photoelectric sensor, or a magnetic field sensor like the Hall effect sensor.

In addition, sensor 2 can be arranged in a connection to several voltage regulators, for example, when there is a need to connect to several voltages that supply different processors, and, also, embodiment with only one voltage regulator, depending on the microcontroller used, is possible.

In other embodiments of the system for measuring non-electrical values, microcontroller 4 could be any programmable logic circuit or microcontroller, not only a microcontroller of the FPGA type.

Examples of use of the system for measuring non-electrical values according to the invention are a sensor of a steering wheel rotation angle or a sensor of a crankshaft rotational speed.

The embodiments are presented herein only as a non-limiting indication concerning the invention and do not limit the scope of protection that is defined by patent claims.

## Claims

1. System for measuring non-electrical values, comprising a microcontroller connected to a power-supply system via at least one voltage regulator and a sensor, **characterised in that** the sensor (2) is connected to the output of at least one voltage regulator and, via a logic level shifter (5), to the microcontroller (4).

2. System according to claim 1, **characterised in that** the voltage regulator output is a core supply voltage regulator (3) output.

3. System according to claims 1 or 2, **characterised in that** the sensor (2) is a sensor that converts a non-electrical value into an electrical value, preferably it is a capacitive sensor or a photoelectric sensor.

4. System according to claims 1 or 2, **characterised in that** the sensor (2) is a magnetic field sensor, preferably a Hall effect sensor.

5. System according to any of the proceeding claims, **characterised in that** the logic level shifter (5) is a single transistor shifter.

6. System according to any of the proceeding claims, **characterized in that** the microcontroller (4) is a programmable logic circuit.

7. System according to claim 6, **characterised in that** the programmable logic circuit constitutes a FPGA-type system.
